# FASCICULE DE BREVET EUROPEEN

(11) **EP 2 572 093 B1**
(45) Date de publication et mention de la délivrance du brevet: **14.07.2021**
(21) Numéro de dépôt: 11725158.7
(22) Date de dépôt: 12.05.2011
(51) Int. Cl.: G10K 11/175, G10K 11/168, F02K 1/82, F02C 7/24, F02K 1/34

(54) **PANNEAU DE TRAITEMENT ACOUSTIQUE MULTICOUCHES**
MERHSCHICHTIGE SCHALLBEHANDLUNGSPLATTE
MULTI-LAYER ACOUSTIC TREATMENT PANEL

(30) Priorité: 19.05.2010 FR 1053881
(43) Date de publication de la demande: 27.03.2013
(73) Titulaire: Safran Aircraft Engines, 75015 Paris (FR); Centre National de la Recherche Scientifique, 75016 Paris (FR); Université Technologie de Compiègne-UTC, 60203 Compiegne cedex (FR)
(72) Inventeur: JULLIARD, Jacques, Michel, Albert, F-77850 Hericy (FR); MARDJONO, Jacky, Novi, F-94130 Nogent Sur Marne (FR); RIOU, Georges, Jean, Xavier, F-77000 Melun (FR); POIRIER, Benjamin, André, François, 77515 St Augustin (FR); VILLE, Jean-Michel, Jean-François, F-60200 Compiegne (FR)
(74) Mandataire: Cabinet Beau de Loménie
(86) Numéro de dépôt international: PCT/FR2011/051062
(87) Numéro de publication internationale: WO 2011/144842

(56) Documents cités:
- JP-A- 8 030 277
- US-A- 5 912 442
- US-A1- 2002 036 115
- US-A1- 2004 237 502
- None

## Description

### Arrière-plan de l'invention

La présente invention se rapporte au domaine général du traitement acoustique dit « passif ».

Le domaine d'application de l'invention est notamment, mais non exclusivement, celui des turbomachines aéronautiques.

L'utilisation de panneaux de traitement acoustique passif est fréquente dans le domaine de l'aéronautique pour réduire les émissions sonores émises par les turbomachines. Par exemple, dans le cas d'un turboréacteur du type à double corps et double flux, de tels panneaux peuvent être disposés sur la face interne de la nacelle qui l'entoure, mais également sur la face externe de son capot primaire.

Un panneau de traitement acoustique passif est généralement formé d'une structure alvéolaire en nid d'abeille recouverte d'une couche poreuse mince faisant office de paroi de veine et fermée à l'autre extrémité par une couche réfléchissante d'un point de vue acoustique (également appelée peau pleine). Des panneaux plus complexes avec des couches poreuses intermédiaires insérées entre des couches à structures en nid d'abeille peuvent être constitués pour étendre l'atténuation sur une plus vaste plage de fréquences, voir par exemple US 2004/237502 A1. La présente invention vise plus particulièrement un tel panneau de traitement acoustique dit « multicouches ».

Il est connu que l'atténuation sonore est beaucoup plus efficace lorsque les modes acoustiques hélicoïdaux sur lesquels se propage l'énergie sonore sont d'ordre élevé. En effet, ces modes acoustiques séjournent plus longtemps dans les conduits et présentent une énergie plus proche de la paroi ce qui facilite la dissipation de leur énergie par des panneaux placés sur les parois de la nacelle ou du turboréacteur. En outre, l'atténuation sonore d'un panneau de traitement acoustique évolue relativement linéairement jusqu'à une certaine longueur de traitement et au-delà, l'atténuation sonore croît nettement moins vite. Un tel comportement peut être expliqué par l'évolution des caractéristiques de la source sonore qui, au fur et à mesure qu'elle se propage dans le panneau, est de moins en moins riche en modes acoustiques d'ordres élevés. Comme l'atténuation sonore dépend des modes acoustiques présents, la présence de modes acoustiques d'ordre faible en plus grand nombre pour le transport de l'énergie acoustique restante implique que l'efficacité d'absorption des panneaux est moindre. Or, les panneaux de traitement acoustique couramment utilisé ne permettent pas de répondre à ces deux exigences.

### Objet et résumé de l'invention

La présente invention a donc pour but principal de pallier de tels inconvénients en proposant d'accroître l'efficacité des traitements acoustiques à iso-surface traitée en agissant sur les caractéristiques de la source sonore.

Ce but est atteint grâce à un panneau de traitement acoustique multicouches selon la revendication 1.

La présence de zones à forte porosité sur la peau perforée du panneau permet de créer une forte rupture d'impédance sur une faible portion, ce qui conduit à transférer une partie de l'énergie des modes acoustiques d'ordre faible vers des modes acoustiques d'ordre élevé qui sont plus faciles atténuer acoustiquement. Outre cet effet de conversion de modes acoustiques, notamment sur le bruit à large bande, le panneau selon l'invention permet, grâce à la présence de canaux d'écoulement d'ondes sonores, de modifier le trajet d'une partie de l'onde sonore captée au travers des zones d'entrée pour la réinjecter en opposition de phase par les zones de sortie plus en aval. Ceci permet de favoriser l'atténuation de fréquences gênantes correspondant à des plages de fonctionnement du turboréacteur. Ainsi, à iso-surface, il est possible d'améliorer considérablement l'efficacité du panneau de traitement acoustique.

Les zones à forte porosité d'une même paire peuvent communiquer avec le canal d'écoulement d'ondes sonores au travers de puits traversant à la fois la première âme à structure alvéolaire et la peau intermédiaire.

Selon une variante de réalisation, les zones à forte porosité d'une même paire peuvent communiquer avec le canal d'écoulement d'ondes sonores au travers de puits traversant la première âme à structure alvéolaire et d'une pluralité d'orifices pratiqués au travers de la peau intermédiaire.

Selon une autre variante de réalisation, les zones à forte porosité d'une même paire peuvent communiquer avec le canal d'écoulement d'ondes sonores au travers de passages formés entre les cavités de la première âme à structure alvéolaire et d'une pluralité d'orifices pratiqués au travers de la peau intermédiaire.

De préférence, les zones de la peau intermédiaire recouvrant le canal d'écoulement d'ondes sonores sont pleines.

Le canal d'écoulement d'ondes sonores peut être formé par un couloir délimité latéralement par des parois de la seconde âme à structure alvéolaire. Alternativement, le canal d'écoulement d'ondes sonores peut être formé par un réseau de cavités adjacentes de la seconde âme à structure alvéolaire communiquant entre elles par des parois poreuses.

De préférence, la peau perforée comprend une pluralité de paires de zones à forte porosité espacées transversalement les unes des autres. Dans ce cas, les zones d'entrée et les zones de sortie peuvent être alignées selon des directions sensiblement transversales au panneau.

L'invention a également pour objet une nacelle de turboréacteur comprenant au niveau d'une face interne au moins un panneau de traitement acoustique tel que défini précédemment. La peau perforée du panneau de traitement acoustique est alors de préférence en contact avec une veine d'écoulement d'un flux froid délimitée à l'extérieur par la face interne de la nacelle.

L'invention a encore pour objet un turboréacteur comprenant au niveau d'une face externe au moins un panneau de traitement acoustique tel que défini précédemment. La peau perforée du panneau de traitement acoustique est ici avantageusement en contact avec une veine d'écoulement d'un flux froid délimitée à l'intérieur par la face externe du turboréacteur.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en coupe longitudinale d'un turboréacteur et de sa nacelle équipés de panneaux de traitement acoustique selon l'invention ;
- la figure 2 est une vue agrandie et en écorché d'un panneau de traitement acoustique multicouches selon l'invention ;
- les figures 3A à 3C sont des vues en coupe dans le sens de l'épaisseur de panneaux de traitement acoustique selon plusieurs variantes de réalisation de l'invention ;
- les figures 4A et 4B sont des vues côté veine de panneaux de traitement acoustique selon des variantes de réalisation de l'invention ; et
- la figure 5 est une courbe montrant le gain d'atténuation sonore obtenu par le panneau de traitement acoustique selon l'invention.

### Description détaillée de modes de réalisation

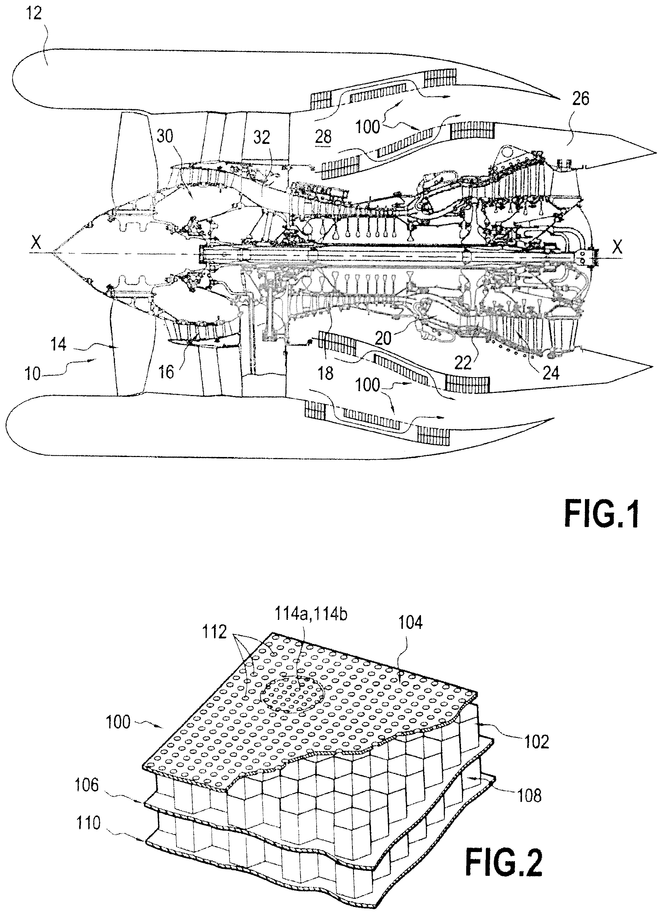

L'invention concerne un panneau de traitement acoustique passif, notamment du type de ceux équipant un turboréacteur d'aéronef et sa nacelle tels que ceux représentés sur la figure 1.

Le turboréacteur 10 représenté sur cette figure 1 est du type à double corps et double flux. Il est entouré d'une nacelle 12 annulaire centrée sur un axe longitudinal X-X du turboréacteur. De façon connue en soi, le turboréacteur comprend, d'amont en aval, une soufflante 14, un compresseur basse pression 16, un compresseur haute pression 18, une chambre de combustion 20, une turbine haute pression 22 et une turbine basse pression 24.

La nacelle 12 entoure le capot primaire 26 du turboréacteur en lui étant concentrique pour définir une veine d'écoulement de flux froid 28. De même, le capot primaire 26 entoure le corps central 30 du turboréacteur en lui étant concentrique pour définir une veine d'écoulement de flux chaud 32. Ainsi, la veine 28 est délimitée radialement, à l'extérieur par la face interne de la nacelle, et à l'extérieur, par la face externe du capot primaire.

Pour la suite de la description, l'amont et l'aval s'entendent par rapport à la direction d'écoulement du flux gazeux traversant le turboréacteur.

La face interne de la nacelle 12 comprend en aval de la soufflante 14 du turboréacteur des panneaux de traitement acoustique 100. Il en est de même pour le capot primaire 26, au niveau de sa face externe autour du compresseur haute pression 18 et de la chambre de combustion 20. Ces panneaux de traitement acoustique 100 ont pour fonction d'atténuer les nuisances sonores émises par le turboréacteur.

La figure 2 représente plus en détails un exemple de réalisation d'un panneau de traitement acoustique 100 selon l'invention dit « multicouches », c'est-à-dire composé d'un empilement d'au moins deux étages de structures en nid d'abeille.

Plus précisément, le panneau 100 comprend une première âme à structure alvéolaire 102 prise en sandwich entre une peau perforée 104 et une peau intermédiaire 106 partiellement perforée, et une seconde âme à structure alvéolaire 108 prise en sandwich entre la peau intermédiaire 106 et une peau pleine 110.

La première structure alvéolaire 102 est fixée (par collage ou brasage par exemple) sur la peau intermédiaire 106 qui lui sert de support. De même, la seconde structure alvéolaire 108 est fixée sur la peau pleine 110 qui lui sert de support. Ces structures alvéolaires 102, 108 sont chacune constituée d'un réseau de cavités en forme de nid d'abeille.

Selon son implantation sur la interne de la nacelle ou sur la face externe du capot primaire du turboréacteur, le panneau de traitement acoustique selon l'invention est disposé de sorte que sa peau perforée 104 soit en contact avec la veine d'écoulement du flux froid 28.

La peau perforée 104 du panneau de traitement acoustique est traversée de part en part par une pluralité d'orifices 112 à l'intérieur desquels l'énergie acoustique des ondes sonores émises par le turboréacteur est dissipée par effet visco-thermique. Le taux de perforation de la peau perforée (c'est-à-dire le rapport entre sa surface totale perforée et sa surface globale) est compris entre 7 et 20% (selon le concept de structure absorbante retenu et l'impédance acoustique optimale visée).

La peau perforée 104 du panneau de traitement acoustique selon l'invention comprend en outre une pluralité de paires zones à forte porosité, c'est-à-dire des zones de la peau qui présentent un taux de perforation supérieur à celui du reste de la peau. Le taux de perforation de ces zones à forte porosité est de préférence compris entre 20 et 30% (à comparer au taux de perforation du reste de la peau perforée qui est compris entre 7 et 20%). Une telle porosité plus élevée s'obtient par exemple en augmentant localement la densité et/ou le diamètre des orifices 112 traversant la peau perforée.

Les zones à forte porosité présentent des taux de perforation qui les rend transparentes d'un point de vue acoustique. Une telle disposition permet de minimiser les pertes aérodynamiques par rapport à de simples ouvertures à grand diamètre.

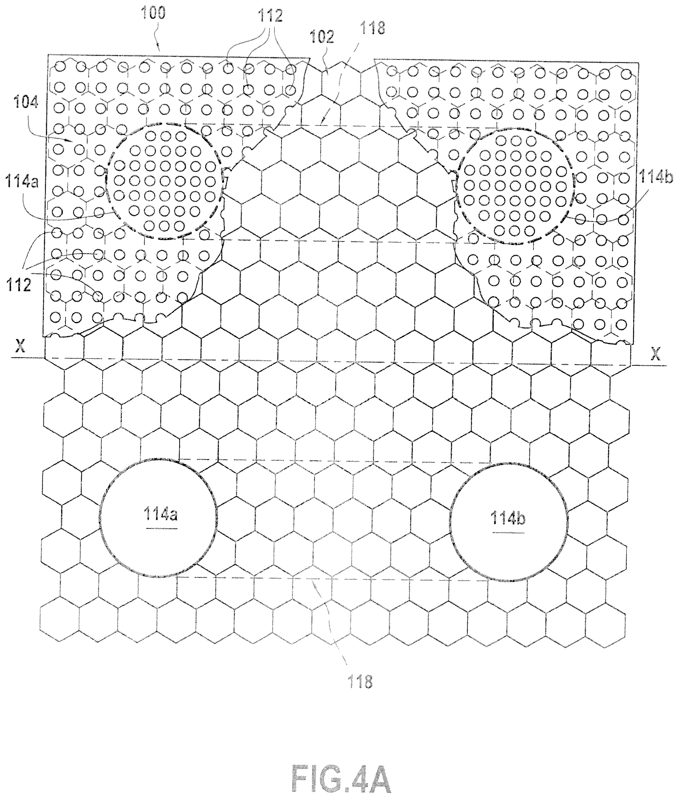

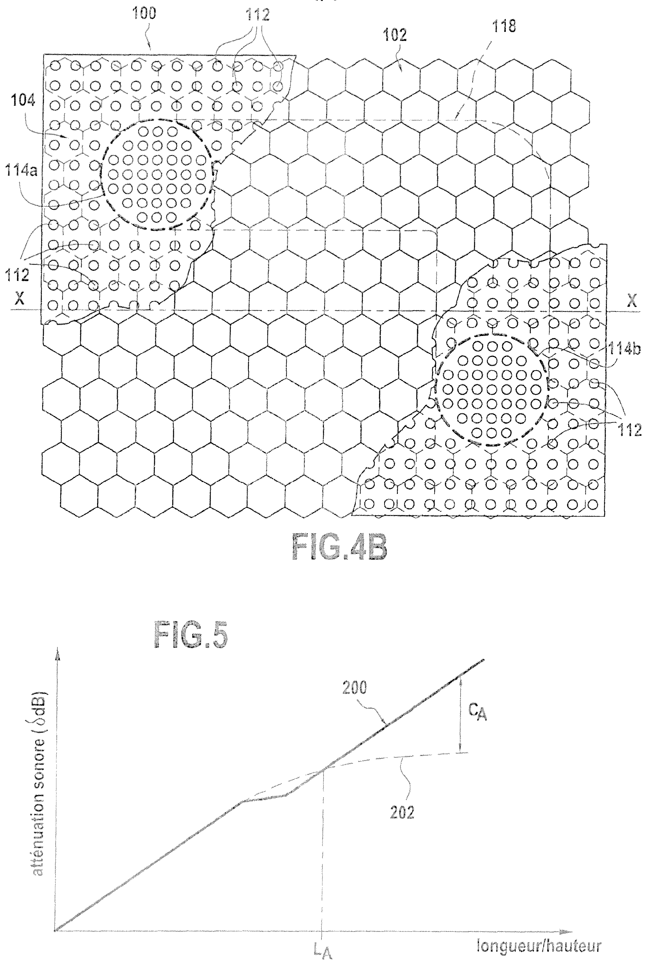

Ces zones à forte porosité 114a, 114b ont une forme pouvant être circulaire (cas des figures 4A et 4B) ou carrée par exemple. A titre d'exemple, dans le cas d'une forme circulaire, ces zones circulaires à forte porosité ont un diamètre dl compris entre 5 et 15 cm. A titre de comparaison, le diamètre d2 des orifices 112 est compris entre 0,75 et 2 mm, ce qui conduit à un rapport d1/d2 compris entre 25 et 200.

Chaque paire de zones à forte porosité est formée d'une zone d'entrée 114a et d'une zone de sortie 114b, la zone de sortie étant espacée longitudinalement vers l'aval par rapport à la zone d'entrée. Par ailleurs, pour chacune des paires de zones à forte porosité, les zones d'entrée 114a et de sortie 114b communiquent au travers de la première âme à structure alvéolaire 102 et de la peau intermédiaire 106 avec les deux extrémités d'un canal d'écoulement d'ondes sonores 118 aménagé dans la seconde âme à structure alvéolaire 108.

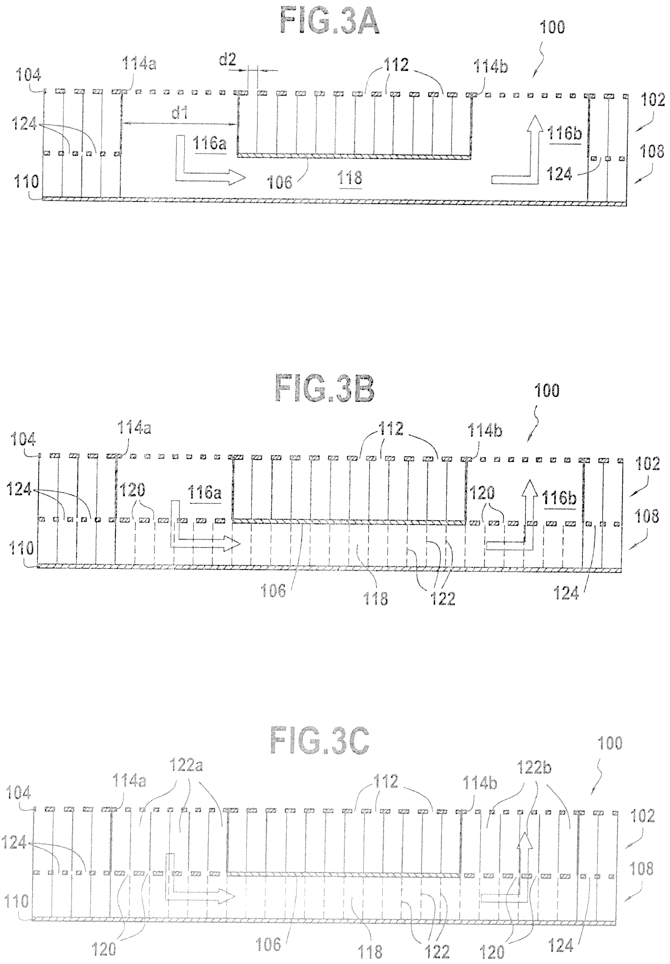

Différentes variantes sont envisageables. Selon un premier mode de réalisation illustré par la figure 3A, les zones à forte porosité 114a, 114b d'une même paire communiquent avec le canal d'écoulement d'ondes sonores 118 au travers de puits 116a, 116b traversant à la fois la première âme à structure alvéolaire 102 et la peau intermédiaire 106.

Selon un deuxième mode de réalisation illustré par la figure 3B, les zones à forte porosité 114a, 114b d'une même paire communiquent avec le canal d'écoulement d'ondes sonores 118 au travers de puits 116a, 116b traversant la première âme à structure alvéolaire 102 et d'une pluralité d'orifices 120 pratiqués au travers de la peau intermédiaire 106 en regard des puits.

Selon un troisième mode de réalisation illustré par la figure 3C, les zones à forte porosité 114a, 114b d'une même paire communiquent avec le canal d'écoulement d'ondes sonores 118 au travers de passages 122a, 122b formés entre les cavités de la première âme à structure alvéolaire 102 et d'une pluralité d'orifices 120 pratiqués au travers de la peau intermédiaire 106 en regard des passages 122a, 122b.

Il est à noter que la peau intermédiaire 116 du panneau de traitement acoustique selon l'invention est perforée par une pluralité d'orifices 124 à l'exception des zones recouvrant le canal d'écoulement d'ondes sonores 118 aménagé dans la seconde structure alvéolaire 108 (en d'autres termes, les zones de la peau intermédiaire recouvrant le canal d'écoulement d'ondes sonores sont pleines). Dans ces zones non perforées, le panneau acoustique fonctionne donc comme un résonateur simple avec une couche poreuse côté veine (i.e. la paroi perforée 104) et une couche non perforée en fond de cavité (i.e. la paroi intermédiaire 106). Dans les zones perforées, la peau intermédiaire permet un fonctionnement du traitement acoustique en double résonateur et présente un taux de perforation compris entre 1 et 4% avec des diamètres pour les orifices 124 de l'ordre de 0,15 à 0,4 mm.

Le canal d'écoulement d'ondes sonores 118 peut être réalisé de plusieurs façons différentes. Dans l'exemple de réalisation de la figure 3A, il est formé par un couloir délimité latéralement par des parois des cavités de la seconde structure alvéolaire 108. A cet effet, il est par exemple obtenu en formant plusieurs panneaux (ou « pains ») de réseaux de cavités en forme de nid d'abeille, ces panneaux étant espacés dans le sens latéral pour former entre eux de tels couloirs.

Selon une variante de réalisation représentée par les figures 3B et 3C, chaque canal d'écoulement d'ondes sonores 118 est formé par un réseau de cavités adjacentes de la seconde structure alvéolaire 108 qui communiquent entre elles par des parois 122 à fort taux de porosité (le taux de porosité devra être suffisamment élevé pour éviter les couplages acoustiques entre les cavités concernées).

Comme indiqué précédemment, la peau intermédiaire 116 n'étant pas perforée dans les zones recouvrant le canal d'écoulement d'ondes sonores 118, ce dernier est donc délimité, latéralement par des parois des cavités de la seconde structure alvéolaire 108, et dans le sens de sa hauteur, par des cloisons non perforées.

Par ailleurs, comme représenté sur l'exemple de réalisation des figures 3A et 4A, le trajet formé par le canal d'écoulement d'ondes sonores 118 peut être rectiligne et ainsi s'étendre sensiblement parallèlement à l'axe longitudinal X-X du turboréacteur. Dans ce cas, les zones d'entrée 114a et de sortie 114b sont alignées selon cet axe X-X.

De même, toujours dans l'exemple de réalisation de la figure 4A, les zones d'entrée 114a peuvent être régulièrement espacées circonférentiellement les unes des autres et alignées entre elles selon une même direction sensiblement transversale (c'est-à-dire perpendiculaire à l'axe X-X). Il en est de même des zones de sortie 114b.

Bien entendu, d'autres dispositions sont envisageables. Ainsi, sur l'exemple de réalisation de la figure 4B, la zone de sortie 114b est décalée circonférentiellement par rapport à la zone d'entrée 114a et le canal d'écoulement d'ondes sonores 118 n'est pas uniquement rectiligne.

On pourra encore imaginer d'autres formes plus complexes pour les canaux d'écoulement d'ondes sonores. En particulier, le réseau de canaux formé dans la seconde structure alvéolaire pourra prendre la forme d'un véritable labyrinthe emprunté par les ondes sonores (avec des zones d'entrée en amont et des zones de sortie en aval). Le chemin parcouru par les ondes sonores dans la seconde structure alvéolaire sera prédéterminé en fonction du retard de phase que l'on souhaite appliquer aux ondes.

On notera que les différents canaux d'écoulement d'ondes sonores pratiqués dans un panneau de traitement acoustique selon l'invention peuvent éventuellement communiquer entre eux par l'intermédiaire de perforations.

Le bénéfice en termes d'atténuation acoustique obtenu par le panneau de traitement acoustique selon l'invention est illustré par la courbe 200 de la figure 5. Cette courbe représente l'atténuation sonore (en décibels) par rapport à la longueur du panneau rapportée à la hauteur de la veine d'écoulement de flux froid du turboréacteur. En pointillés, est représentée une courbe 202 obtenue avec un panneau de traitement acoustique conventionnel. A partir d'une certaine longueur relative L_{A} du panneau, on constate qu'un traitement acoustique conventionnel a tendance à stagner en termes d'atténuation sonore. Au contraire, le panneau de traitement acoustique selon l'invention permet d'obtenir un gain d'atténuation acoustique C_{A} important au-delà de cette longueur relative L_{A} de panneau.

## Revendications

1. Panneau de traitement acoustique multicouches (100), comprenant :
une première âme à structure alvéolaire (102) prise en sandwich entre une peau perforée (104) et une peau intermédiaire (106); et
une seconde âme à structure alvéolaire (108) prise en sandwich entre la peau intermédiaire et une peau pleine (110);
dans lequel la peau perforée (104) comprend au moins une paire de zones à forte porosité présentant un taux de perforation supérieur à un taux de perforation du reste de la peau perforée (104) et formée d'une zone d'entrée (114a) et d'une zone de sortie (114b) espacées longitudinalement l'une de l'autre, les zones à forte porosité d'une même paire communiquant au travers de la première âme à structure alvéolaire et de la peau intermédiaire (106) avec les deux extrémités d'un canal d'écoulement d'ondes sonores (118) aménagé dans la seconde âme à structure alvéolaire (108),
**caractérisé en ce que**
la peau intermédiaire (106) est perforée par une pluralité d'orifices (124) à l'exception des zones recouvrant le canal d'écoulement d'ondes sonores (118) aménagé dans la seconde structure alvéolaire (108).

2. Panneau selon la revendication 1, dans lequel les zones à forte porosité d'une même paire communiquent avec le canal d'écoulement d'ondes sonores au travers de puits traversant à la fois la première âme à structure alvéolaire et la peau intermédiaire.

3. Panneau selon la revendication 1, dans lequel les zones à forte porosité d'une même paire communiquent avec le canal d'écoulement d'ondes sonores au travers de puits traversant la première âme à structure alvéolaire et d'une pluralité d'orifices pratiqués au travers de la peau intermédiaire.

4. Panneau selon la revendication 1, dans lequel les zones à forte porosité d'une même paire communiquent avec le canal d'écoulement d'ondes sonores au travers de passages formés entre les cavités de la première âme à structure alvéolaire et d'une pluralité d'orifices pratiqués au travers de la peau intermédiaire.

5. Panneau selon l'une quelconque des revendications 1 à 4, dans lequel les zones de la peau intermédiaire recouvrant le canal d'écoulement d'ondes sonores sont pleines.

6. Panneau selon l'une quelconque des revendications 1 à 5, dans lequel le canal d'écoulement d'ondes sonores est formé par un couloir délimité latéralement par des parois de la seconde âme à structure alvéolaire.

7. Panneau selon l'une quelconque des revendications 1 à 5, dans lequel le canal d'écoulement d'ondes sonores est formé par un réseau de cavités adjacentes de la seconde âme à structure alvéolaire communiquant entre elles par des parois poreuses.

8. Panneau selon l'une quelconque des revendications 1 à 7, dans lequel la peau perforée comprend une pluralité de paires zones à forte porosité espacées transversalement les unes des autres.

9. Panneau selon la revendication 8, dans lequel les zones d'entrée et les zones de sortie sont alignées selon des directions sensiblement transversales au panneau.

10. Nacelle de turboréacteur comprenant au niveau d'une face interne au moins un panneau de traitement acoustique selon l'une quelconque des revendications 1 à 9.

11. Nacelle selon la revendication 10, dans laquelle la peau perforée du panneau de traitement acoustique est en contact avec une veine d'écoulement d'un flux froid délimitée à l'extérieur par la face interne de la nacelle.

12. Turboréacteur comprenant au niveau d'une face externe au moins un panneau de traitement acoustique selon l'une quelconque des revendications 1 à 9.

13. Turboréacteur selon la revendication 12, dans lequel la peau perforée du panneau de traitement acoustique est en contact avec une veine d'écoulement d'un flux froid délimitée à l'intérieur par la face externe du turboréacteur.

## Patentansprüche

1. Mehrschichtige Schallbehandlungsplatte (100), die umfasst:
einen ersten Kern (102) mit wabenförmiger Struktur, der zwischen einer perforierten Hülle (104) und einer Zwischenhülle (106) eingeschichtet ist; und
einen zweiten Kern (108) mit wabenförmiger Struktur, der zwischen der Zwischenhülle und einer massiven Hülle (110) eingeschichtet ist;
wobei die perforierte Hülle (104) mindestens ein Paar Zonen mit hoher Porosität umfasst, die einen Perforationsanteil aufweisen, der höher ist als ein Perforationsanteil des Rests der perforierten Hülle (104) und aus einer Eingangszone (114a) und aus einer Ausgangszone (114b) besteht, die in Längsrichtung voneinander beabstandet sind, wobei die Zonen mit hoher Porosität eines selben Paares durch den ersten Kern mit wabenförmiger Struktur und die Zwischenhülle (106) mit den zwei Enden eines Schallwellen-Strömungskanals (118) verbunden sind, der in dem zweiten Kern (108) mit wabenförmiger Struktur eingerichtet ist,
**dadurch gekennzeichnet, dass**:
die Zwischenhülle (106) mit Ausnahme der Zonen, die den in der zweiten wabenförmigen Struktur (108) eingerichteten Schallwellen-Strömungskanal (118) bedecken, durch eine Vielzahl von Öffnungen (124) perforiert ist.

2. Platte nach Anspruch 1, wobei die Zonen mit hoher Porosität eines selben Paares mit dem Schallwellen-Strömungskanal durch Schächte verbunden sind, die sowohl den ersten Kern mit wabenförmiger Struktur als auch die Zwischenhülle durchqueren.

3. Platte nach Anspruch 1, wobei die Zonen mit hoher Porosität eines selben Paares mit dem Schallwellen-Strömungskanal durch Schächte, die den ersten Kern mit wabenförmiger Struktur durchqueren, und eine Vielzahl von Öffnungen verbunden sind, die durch die Zwischenhülle hergestellt sind.

4. Platte nach Anspruch 1, wobei die Zonen mit hoher Porosität eines selben Paares mit dem Schallwellen-Strömungskanal durch Durchgänge, die zwischen den Hohlräumen des ersten Kerns mit wabenförmiger Struktur gebildet sind, und eine Vielzahl von Öffnungen verbunden sind, die durch die Zwischenhülle hergestellt sind.

5. Platte nach einem der Ansprüche 1 bis 4, wobei die Zonen der Zwischenhülle, die den Schallwellen-Strömungskanal bedeckt, massiv sind.

6. Platte nach einem der Ansprüche 1 bis 5, wobei der Schallwellen-Strömungskanal durch einen Gang gebildet ist, der seitlich durch Wände des zweiten Kerns mit wabenförmiger Struktur begrenzt ist.

7. Platte nach einem der Ansprüche 1 bis 5, wobei der Schallwellen-Strömungskanal durch ein Netz von benachbarten Hohlräumen des zweiten Kerns mit wabenförmiger Struktur gebildet ist, die untereinander durch poröse Wände verbunden sind.

8. Platte nach einem der Ansprüche 1 bis 7, wobei die perforierte Hülle eine Vielzahl von Zonenpaaren mit hoher Porosität umfasst, die quer voneinander beabstandet sind.

9. Platte nach Anspruch 8, wobei die Eingangszonen und die Ausgangszonen entlang von Richtungen ausgerichtet sind, die im Wesentlichen quer zu der Platte sind.

10. Turbinengondel, die im Bereich einer Innenseite mindestens eine Schallbehandlungsplatte nach einem der Ansprüche 1 bis 9 umfasst.

11. Gondel nach Anspruch 10, wobei die perforierte Hülle der Schallbehandlungsplatte mit einem Strömungsgang eines Mantelstroms in Kontakt ist, der außen durch die Innenseite der Gondel abgegrenzt ist.

12. Turbinentriebwerk, das im Bereich einer Außenseite mindestens eine Schallbehandlungsplatte nach einem der Ansprüche 1 bis 9 umfasst.

13. Turbinentriebwerk nach Anspruch 12, wobei die perforierte Hülle der Schallbehandlungsplatte mit einem Strömungsgang eines Mantelstroms in Kontakt ist, der innen durch die Außenfläche des Turbinentriebwerks abgegrenzt ist.

## Claims

1. A multilayer acoustic treatment panel (100) comprising:
a first cellular-structure core (102) sandwiched between a perforated skin (104) and an intermediate skin (106); and
a second cellular-structure core (108) sandwiched between the intermediate skin (106) and a continuous skin (110);
wherein the perforated skin (104) includes at least one pair of high-porosity zones presenting a perforation ratio greater than the perforation ratio of the remainder of the perforated skin (104) and formed by an inlet zone (114a) and an outlet zone (114b) that are longitudinally spaced apart from each other, the high-porosity zones of a given pair communicating through the first cellular-structure core and the intermediate skin (106) with the two ends of a soundwave flow channel (118) arranged in the second cellular-structure core (108), and the intermediate skin (106) is perforated by a plurality of orifices (124) with the exception of the zones covering the soundwave flow channel (118).

2. A panel according to claim 1, wherein the high-porosity zones of a given pair communicate with the soundwave flow channel via wells passing both through the first cellular-structure core and the intermediate skin.

3. A panel according to claim 1, wherein the high-porosity zones of a given pair communicate with the soundwave flow channel via wells passing through the first cellular-structure core and via a plurality of orifices formed through the intermediate skin.

4. A panel according to claim 1, wherein the high-porosity zones of a given pair communicate with the soundwave flow channel through passages formed between the cavities of the first cellular-structure core and a plurality of orifices formed through the intermediate skin.

5. A panel according to any of claims 1 to 4, wherein the zones of the intermediate skin covering the soundwave flow channel are continuous.

6. A panel according to any of claims 1 to 5, wherein the soundwave flow channel is formed by a corridor that is defined laterally by walls of the second cellular-structure core.

7. A panel according to any of claims 1 to 5, wherein the soundwave flow channel is formed by an array of adjacent cavities of the second cellular-structure core that communicate with one another via porous walls.

8. A panel according to any of claims 1 to 7, wherein the perforated skin has a plurality of pairs of high-porosity zones that are transversely spaced from one another.

9. A panel according to claim 8, wherein the inlet zones and the outlet zones are in alignment in directions that are substantially transverse relative to the panel.

10. A turbojet nacelle including at least one acoustic treatment panel according to any of claims 1 to 9 on an inside face thereof.

11. A nacelle according to claim 10, wherein the perforated skin of the acoustic treatment panel is in contact with a cold stream flow passage defined on the outside by the inside face of the nacelle.

12. A turbojet including at least one acoustic treatment panel according to any of claims 1 to 9 on an outside face thereof.

13. A turbojet according to claim 12, wherein the perforated skin of the acoustic treatment panel is in contact with a cold stream flow passage defined on the inside by the outside face of the turbojet.
